# EUROPÄISCHE PATENTSCHRIFT

(11) **EP 1 601 489 B1**
(45) Veröffentlichungstag und Bekanntmachung des Hinweises auf die Patenterteilung: **12.09.2007**
(21) Anmeldenummer: 04705737.7
(22) Anmeldetag: 28.01.2004
(51) Int. Cl.: B23K 11/30

(54) **SCHUTZEINRICHTUNG F R SCHWEISSELEKTRODEN**
PROTECTIVE DEVICE FOR WELDING ELECTRODES
DISPOSITIF DE PROTECTION POUR ELECTRODES DE SOUDAGE

(30) Priorität: 04.03.2003 AT 3172003
(43) Veröffentlichungstag der Anmeldung: 07.12.2005
(73) Patentinhaber: Fronius International GmbH, 4363 Pettenbach (AT)
(72) Erfinder: STIEGLBAUER, Walter, A-4901 Manning (AT); HIESLMAIR, Gerald, A-4533 Piberbach (AT)
(74) Vertreter: Sonn & Partner Patentanwälte
(86) Internationale Anmeldenummer: PCT/AT2004/000032
(87) Internationale Veröffentlichungsnummer: WO 2004/078404

(56) Entgegenhaltungen:
- US-A- 5 552 573
- PATENT ABSTRACTS OF JAPAN vol. 1995, no. 05, 30. Juni 1995 (1995-06-30) & JP 07 051865 A (TOYOTA MOTOR CORP), 28. Februar 1995 (1995-02-28)
- PATENT ABSTRACTS OF JAPAN vol. 017, no. 312 (M-1429), 15. Juni 1993 (1993-06-15) & JP 05 031586 A (FURUKAWA ALUM CO LTD), 9. Februar 1993 (1993-02-09)
- OIKAWA H ET AL: "RESISTANCE SPOT WELDING OF STEEL AND ALUMINIUM SHEET USING INSERT METAL" WELDING INTERNATIONAL, WELDING INSTITUTE. ABINGTON, GB, Bd. 13, Nr. 5, 1999, Seiten 349-359, XP000824274 ISSN: 0950-7116

## Beschreibung

Die Erfindung betrifft eine Einrichtung zum Schutz einer Elektrode beim Widerstandsschweißen von Werkstücken, insbesondere von Blechen, mit einem über der Elektrode, vorzugsweise gegenüber dieser verschiebbar angeordneten Band, wobei ein Trägermaterial des Bandes eine elektrisch leitfähige Beschichtung aufweist.

Derzeit werden beispielsweise im Karosseriebau vermehrt Bleche oder andere Werkstücke aus Aluminium-Legierungen und Magnesium, sowie verzinkte bzw. beschichtete Stahlbleche - teilweise in hochfester Ausführung - eingesetzt. Neben Vorteilen wie Gewichtsersparnis und guter Korrosionsbeständigkeit verursachen diese Materialien bzw. deren Beschichtungen, Probleme beim Fügen durch Widerstands-Punktschweißen. In erster Linie wirkt sich die gegenüber blankem Stahlblech stark verringerte Standmenge der verwendeten Punktschweißelektroden nachteilig aus. Der hohe Verschleiß der Elektroden verursacht hohe Kosten durch häufiges Nachbearbeiten der Elektrodenkontaktfläche bzw. durch die daraus resultierenden häufigen Elektrodenwechsel sowie eine verminderte Schweißqualität insbesondere vor einer Nachbearbeitung der Elektroden oder vor einem Elektrodenwechsel.

Zum Schutz der Punktschweißelektroden vor Verschmutzung bzw. einer Auflegierung der Elektrode durch den zu verschweißenden Werkstoff ist es bekannt, zwischen der Elektrode und dem Werkstück eine Metallfolie in Form eines Bandes beizulegen. Um einen gesicherten Bandvorschub zu erlangen, ist es notwendig, ein Festkleben des Bandes an der Kontaktfläche der Elektrode zu verhindern.

Hierzu ist aus der EP 0 830 915 B1 eine Vorrichtung zum Schutz der Elektroden beim Punktschweißen bekannt, bei der ein Band mit Hilfe einer Abwickelvorrichtung über die zu schützende Elektrode gezogen wird. Das Band besteht im Wesentlichen aus einer Kupfer-Nickel-Legierung oder aus reinem Nickel, mit einer Dicke von 0,02 bis 0,05 mm. Für eine längere Standfestigkeit ist die Elektrode, insbesondere die Elektrodenkappe mit Silber oder einem Silbermetalloxid beschichtet oder mit einem entsprechenden Einsatz versehen.

Weiters ist aus der US 5 552 573 A ein Band für ein Widerstandsschweißverfahren zum Schutz der Elektrode bekannt, welches aus einem Grundmaterial besteht, das beidseitig beschichtet ist. Die Schichten können aus dem gleichen Material oder unterschiedlichen Materialien bestehen. Das Grundmaterial weist eine Dicke von 0,02 bis 1 mm auf und besteht aus Eisen, Stahl, Kupfer oder einer Kupfer-Legierung. Die aufgetragenen Schichten weisen eine Dicke im Bereich von 1 bis 100 µm auf und können aus Nickel, Titan, Niob, Molybdän, Wolfram, Chrom, Kobalt oder Legierungen davon, bestehen. Nachteilig bei derartigen Bändern ist der sehr hohe Herstellungsaufwand durch Beschichten oder Legieren und somit die sehr hohen Herstellungskosten. Ein weiterer sehr wesentlicher Nachteil besteht darin, dass eine Vielzahl von Kombinationen der unterschiedlichsten Materialien möglich sind, so dass für die unterschiedlichen Anwendungen eine aufwendige und kostspielige Lagerung derartiger Kombinationsbänder notwendig ist, da der Benutzer die unterschiedlichen Kombinationen nicht selbst zusammenstellen kann.

Anwendungen von Bändern zum Schutz der Elektroden beim Punktschweißverfahren sind weiters aus der DE 197 54 546 C1, der JP 10-029071 A, der JP 08-118037 A, JP 04-322886 A oder der JP 05-192774 A bekannt. Dabei wird bei den Punktschweißwerkzeugen das über eine Wickelvorrichtung zu- und abgeführte Band über der Elektrode positioniert. Somit kommt beim Punktschweißprozess das Band am Werkstück zum Anliegen, und die Elektrode wird vor einer Berührung mit dem Werkstück geschützt.

Nachteilig bei den Verfahren gemäß der DE 197 54 546 C1 und der JP 04-322886 A ist, dass das Schutzband bei der Förderung über die Elektrode gezogen wird und somit aufgrund der Reibung zwischen der Elektrode und dem Band ein hoher Elektrodenverschleiß zustande kommt.

Bei den Verfahren gemäß der JP 10-029071 A und der JP 08-118037 A ist nachteilig, dass für die Bandförderung, insbesondere die Zu- und Abführung des Bandes, ein sehr komplexer Aufbau notwendig ist, so dass derartige Punktschweißwerkzeuge in der Praxis kaum einsetzbar sind. Mit derartigen Anlagen ist es nur möglich, einfache Bleche miteinander zu verschweißen. Eine Anwendung bei Punktschweißzangen für Robotern, insbesondere in der Autoindustrie, hingegen ist nicht möglich, da hierzu kleine kompakte Punktschweißwerkzeuge benötigt werden.

Die JP 07-051865 A beschreibt ein Schutzband für die Elektroden beim Widerstandsschweißen von Werkstücken gemäß dem Oberbegriff des Anspruchs 1 welches aus einem Trägermaterial mit einer beidseitig angeordneten elektrisch leitfähigen Beschichtung besteht. Das Trägermaterial besteht aus Kupfer, während die elektrisch leitfähige Beschichtung aus Grafitpartikeln besteht. Die Beschichtung der Kupferfolie mit den Grafitpartikeln dient dazu, die Legierungsreaktion zwischen dem Werkstück und den Elektroden und dem Werkstück und der Elektrodenschutzschicht zu erschweren. Die Herstellung eines solchen Bandes ist jedoch relativ aufwendig.

Der Erfindung liegt die Aufgabe zu Grunde, eine Einrichtung zum Schutz einer Elektrode zu schaffen, bei der die Schweißqualität wesentlich verbessert wird.

Die Aufgabe der Erfindung wird durch eine Einrichtung gemäß Anspruch 1 gelöst, wobei die Beschichtung auf der von der Elektrode abgewandten Seite des Bandes angeordnet ist und aus einem Material besteht, welches eine geringere Härte aufweist als das Trägermaterial des Bandes, und eine Schmelztemperatur unter 1000 °C aufweist. Vorteilhaft dabei ist, dass durch das weiche Beschichtungsmaterial dieses aufgrund des von der Elektrode bzw. der Schweißzange ausgeübten Druckes vor dem Schweißprozess in die aufgerissene Oxidschicht der zu verschweißenden Werkstücke eingepresst und somit ein verbesserter Stromübergang und ein geringerer elektrischer Widerstand geschaffen wird. Dadurch fällt die Wärmeeinwirkung an der Kontaktfläche des Bandes zum Werkstück am Beginn der Punktschweißung wesentlich geringer aus und es werden somit Schweißspritzer vermieden. Die weiche Beschichtung des Schutzbandes hat insbesondere auf Aluminiumwerkstoffe vorteilhafte Auswirkungen, welche auch bei anderen Werkstoffen ähnlich gestaltet sind. Ein weiterer Vorteil besteht darin, dass durch den erheblich besseren Stromübergang die Sicherheit des Schweißprozesses sehr stark erhöht wird und Schweißfehler stark reduziert werden. Damit können kostenintensive Nachbearbeitungsschritte vermieden bzw. reduziert werden.

Beispielsweise kann die Beschichtung des Bandes bzw. Trägermaterials aus Zinn oder Zink oder Zinn- oder Zink-Legierung gebildet sein.

Bevorzugterweise besteht das Band aus sogenanntem Weißblech, wobei das Trägermaterial aus Stahl und die Beschichtung aus Zinn besteht.

Es ist möglich, dass zumindest zwei übereinander angeordnete Bänder vorgesehen sind, wobei jenes Band, welches mit dem Werkstück, insbesondere Blech, in Berührung kommt, an der dem Werkstück, insbesondere Blech, zugewandten Seite die Beschichtung aufweist, welche eine geringere Höhe aufweist als das Trägermaterial dieses Bandes. Neben zwei übereinander angeordneten Bändern können auch mehr übereinander angeordnete Bänder zur Anwendung kommen.

Gemäß einem weiteren Merkmal der Erfindung ist vorgesehen, dass das Material des Trägermaterials des der Elektrode zugewandten Bandes aus der Gruppe der Eisenmetalle oder einer Legierung mit dem Hauptbestandteil aus der Gruppe der Eisenmetalle oder aus Kupfer oder einer Kupfer-Legierung besteht. Durch die relativ geringe Schmelztemperatur wird erreicht, dass das Material während des Schweißprozesses vollständig verdampft und somit keinen Einfluss auf die Oberfläche des Werkstückes ausübt.

Die Erfindung wird anschließend durch Ausführungsbeispiele näher beschrieben.

Es zeigen:
Fig. 1 eine schematische Seitenansicht einer Ausführungsform eines Punktschweißwerkzeuges;
Fig. 2 einen Schnitt des Bandes zum Schutz der Elektrode in vereinfachter, schematischer Darstellung;
Fig. 3 einen Schnitt durch eine weitere Ausführungsform einer Elektrodenschutzeinrichtung bestehend aus zwei übereinander angeordneten Bändern.

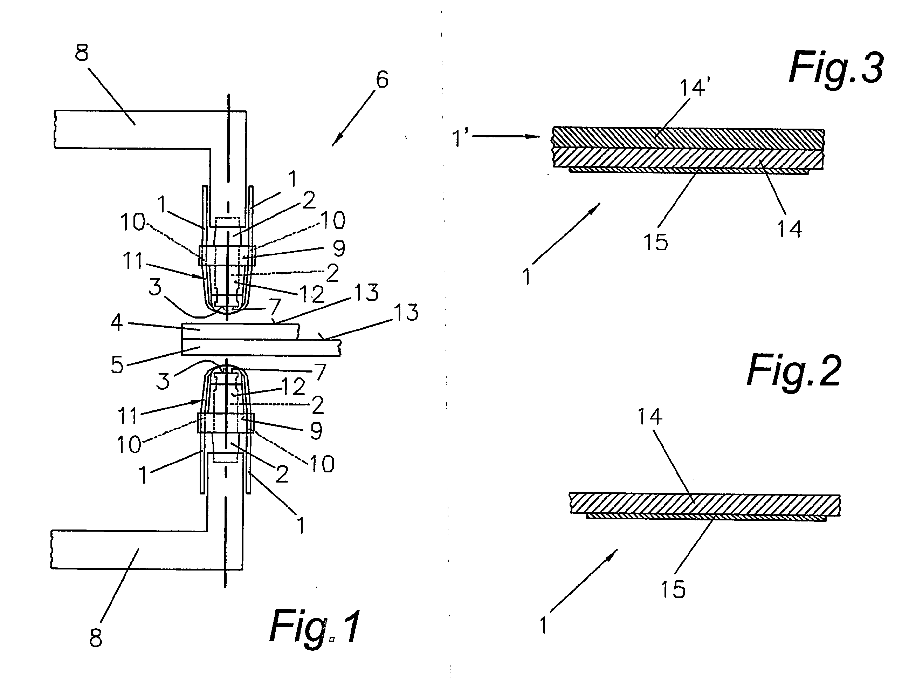

In den Fig. 1 und 2 ist ein Band 1 zum Schutz von Elektroden 2 beim Widerstandsschweißen gezeigt.

Derartige Bänder 1 zum Schutz von Elektroden 2, die bevorzugt aus Kupfer oder einer Kupfer-Legierung gebildet sind, werden in der Praxis zwischen der Elektrode 2, insbesondere einer Elektrodenkappe 3, sowie der Oberfläche der zu verschweißenden Werkstücke, insbesondere Bleche 4, 5, und relativ zur Elektrode 2 verschiebbar angeordnet, wie dies schematisch in Fig. 1 dargestellt ist. Dabei handelt es sich um ein Punktschweißwerkzeug 6 zum Widerstandsschweißen von Blechen 4, 5 oder Bauteilen. Bevorzugt wird das Punktschweißwerkzeug 6 mit einer Wickelvorrichtung (nicht dargestellt) zum Auf- und Abwickeln des an der Elektrode 2 quer anliegenden Bandes 1 eingesetzt. Es ist jedoch auch möglich, dass ein zwei- oder mehrteiliges Band 1 mit oder ohne einer auflegierten Schicht zum Schutz der Elektroden 2 eingesetzt werden kann.

Weiters kann um die Elektrode 2 im Bereich der Elektrodenkappe 3 bzw. einer Kontaktfläche der Elektrode 2 mit dem Blech 4 bzw. 5, ein Druckelement 7 beweglich an der Elektrode 2 angeordnet sein. Dieses Druckelement 7 beaufschlagt die Werkstücke, insbesondere Bleche 4, 5, mit zusätzlichem Druck. Beim Einsatz des Punktschweißwerkzeugs 6 mit dem Band 1 weist das Druckelement 7, bevorzugterweise insbesondere an der Stirnfläche, eine Führung für das Band 1 auf. Das Druckelement 7 kann zum Abheben des Bandes 1 von der Elektrode 2 ausgebildet sein, so dass das Band 1 während oder nach dem Öffnen einer Schweißzange 8 oder einer funktionsähnlichen Apparatur von der Oberfläche der Elektrode 2 bzw. der Elektrodenkappe 3 abgehoben werden kann. Die Führung im Druckelement 7 ist derart ausgebildet, dass das Band 1 mit einer Stirnfläche des Druckelements 7 ebenflächig abschließt. Selbstverständlich ist es auch möglich, dass die Führung für das Band 1 im Druckelement 7 so ausgebildet ist, dass das Band 1 über die Stirnfläche des Druckelements 7 ragt. Im entlasteten Zustand, d.h. bei geöffneter Schweißzange 8, überragt das Druckelement 7 die Elektrode 2 und distanziert somit das Band 1 von der Elektrode 2.

Weiters kann an der Elektrode 2 ein Stützelement 9 angeordnet sein, welches Führungskanäle 10 zur Aufnahme des Bandes 1 aufweist. Zwischen dem Stützelement 9 und dem Druckelement 7 kann ein Mittel 11 zur Aufbringung einer Kraft auf das Druckelement 7, insbesondere ein Federelement, angeordnet sein, wodurch das Druckelement 7 mit entsprechendem Druck beaufschlagt und entlang der Elektrode 2 verschoben werden kann.

Im dargestellten Beispiel wird das Druckelement 7 bzw. die Bandführung durch eine Elastomerfeder 12 nach vorne gepresst. Natürlich kann das Druckelement 7 auch anders, z.B. pneumatisch, hydraulisch oder elektrisch betätigt werden. Somit übt das Druckelement 7 einen hohen Druck bzw. eine große Kraft auf das Werkstück, insbesondere Blech 4 bzw. 5, aus, wenn dieses bei aktivierter Schweißzange 8 gegen das Werkstück, insbesondere Blech 4 bzw. 5, gepresst wird. Beim Schließen der Schweißzange 8 wird das Druckelement 7 durch das Aufsetzen am Werkstück, insbesondere Blech 4, 5, nach hinten gedrückt, bis die Elektrode 2 bzw. die Elektrodenkappe 3 über das Band 1 die Blechoberflächen 13 des Bleches 4 bzw. 5 kontaktiert. Beim Öffnen der Schweißzange 8 wird das Druckelement 7 durch die Mittel 11 zur Kraftaufbringung, insbesondere die Elastomerfeder 12 oder ein anderes Antriebsmittel, nach vorne gedrückt. Wegen der bewusst hergestellten Zugspannung und der unvermeidbaren Steifigkeit des Bandes 1 wird dieses von der Oberfläche der Elektrode 2, insbesondere der Elektrodenkappe 3, zwangsweise distanziert.

Das Druckelement 7 drückt also während des Schweißprozesses teilweise auf die der Schweißzone naheliegenden Blechoberfläche 13 und verhindert dadurch ein ansonsten für Punktschweißen übliches Öffnen der beiden Werkstücke, insbesondere Bleche 4, 5 durch zusätzliche Druckbeaufschlagung zu der Elektrode 2.

Das Band 1 bzw. ein Trägermaterial 14 des Bandes 1 ist auf der von der Elektrode 2 abgewandten Seite mit einem elektrisch gut leitfähigen, weichen Material beschichtet, wobei das Material der Beschichtung 15 eine geringe Härte aufweist, als das Trägermaterial 14 des Bandes 1. Die Beschichtung 15 des Bandes 1 kann aus Zinn oder Zink oder einer Zinn- oder Zink-Legierung gebildet sein, vorzugsweise mit einer Schmelztemperatur unter 1000 °C. Bevorzugt besteht das Band 1 aus Weißblech, also aus Stahl mit einer Zinnauflage.

Selbstverständlich ist es möglich, dass die Beschichtung 15 bei einem Band 1 aus zumindest zwei Teilen bzw. Lagen, also aus zwei übereinander angeordneten Bändern 1, ebenfalls verwendet werden kann. Dabei ist bei einem zweiteiligen Band 1, jenes Band 1 bzw. jene Lage, welche(s) mit dem Werkstück bzw. dem Blech 4 bzw. 5 in Berührung kommt, mit dem elektrisch gut leitfähigen, weichen Material, also der Beschichtung 15, versehen und es kommt diese Beschichtung 15 mit dem Werkstück bzw. Blech 4 bzw. 5 in Kontakt. Das Material der der Elektrode 2 zugewandten Lage des Bandes 1 kann aus der Gruppe der Eisenmetalle, oder einer Legierung mit dem Hauptbestandteil aus der Gruppe der Eisenmetalle oder aus Kupfer oder einer Kupfer-Legierung bzw. Stahl oder Stahl-Legierung bestehen.

Beim Widerstandsschweißen beispielsweise von Aluminiumbauteilen bzw. Aluminium-Blechen 4, 5 führt die isolierende Oxidschicht der Bauteile bzw. Bleche 4, 5 zu Problemen. Diese Oxidschicht ist sehr spröde und wirkt elektrisch isolierend. Durch die elektrisch sehr gut leitfähige, weiche Beschichtung 15 des Bandes 1 wird nunmehr erreicht, dass aufgrund des Druckes von der Schweißzange 8 die Oxidschicht des Bleches 4, 5 aufgebrochen bzw. aufgerissen wird und die weiche Beschichtung 15 bzw. das Material der Beschichtung 15 vom Band 1 in die Zwischenräume der Oxidschicht gepresst wird, wodurch ein sehr guter Stromübergang, also ein kleinerer Widerstand und eine größere Stromeintrittsfläche geschaffen wird.

Dieser verbesserte Kontakt zum Grundwerkstoff der Bleche 4, 5 bewirkt nun, dass die Wärmeeinbringung an der Kontaktflächezwischen Band 1 und Blech 4 bzw. 5, durch den geringeren elektrischen Widerstand und die größere Stromeintrittsfläche am Beginn der Schweißung, also bei Beaufschlagung mit Energie, wesentlich geringer ausfällt und somit Oberflächenspritzer vermieden werden.

Grundsätzlich kann also gesagt werden, dass durch den Einsatz eines elektrisch gut leitfähigen, weichen Materials als Beschichtung 15 für das Band 1 erreicht wird, dass das Material der Beschichtung 15 sich mit dem Material der Bleche 4, 5 unter Einwirkung von Druck vermischt und somit eine wesentliche verbesserte Schweißqualität durch Verhinderung von Schweißspritzer erreicht wird. Der Einsatz eines derartigen Bandes 1 mit einer entsprechenden Beschichtung 15 ist nicht nur beim Verschweißen von Blechen 4, 5 aus Aluminium von Vorteil.

Fig. 3 zeigt einen Schnitt durch eine Ausführungsform einer Elektrodenschutzeinrichtung, bei der zwei Bänder 1, 1' übereinander angeordnet sind, wobei jenes Band 1, welches mit dem Werkstück, insbesondere den Blechen 4, 5, in Berührung kommt, an der dem Werkstück, insbesondere Blech 4, 5, zugewandten Seite die Beschichtung 15 aufweist, welche eine geringere Härte aufweist als das Trägermaterial 14 des Bandes 1. Darüber hinaus ist die Höhe der Beschichtung 15 geringer als jene des Trägermaterials 14 des Bandes 1. Das zweite Band 1' besteht lediglich aus einem Trägermaterial 14' ohne Beschichtung. Natürlich können auch mehrere Bänder, auch mit unterschiedlichen Dicken, übereinander angeordnet werden.

## Patentansprüche

1. Einrichtung zum Schutz einer Elektrode (2) beim Widerstandsschweißen von Werkstücken, insbesondere von Blechen (4, 5), mit einem über der Elektrode (2), vorzugsweise gegenüber dieser verschiebbar angeordneten Band (1), wobei ein Trägermaterial (14) des Bandes (1) eine elektrisch leitfähige Beschichtung (15) aufweist, die auf der von der Elektrode (2) abgewandten Seite des Bandes (1) angeordnet ist, **dadurch gekennzeichnet, dass** die Beschichtung (15) aus einem Material besteht, welches eine geringere Härte aufweist, als das Trägermaterial (14) des Bandes (1), und eine Schmelztemperatur unter 1000 °C aufweist.

2. Schutzeinrichtung nach Anspruch 1, **dadurch gekennzeichnet, dass** die Beschichtung (15) aus Zinn oder Zink oder einer Zinn- oder Zink-Legierung gebildet ist.

3. Schutzeinrichtung nach Anspruch 1 oder 2, **dadurch gekennzeichnet, dass** das Trägermaterial des Bandes (1) aus Stahl und die Beschichtung (15) aus Zinn besteht.

4. Schutzeinrichtung nach einem oder mehreren der Ansprüche 1 bis 3, **dadurch gekennzeichnet, dass** zumindest zwei übereinander angeordnete Bänder (1, 1') vorgesehen sind, wobei jenes Band (1), welches mit dem Werkstück, insbesondere Blech (4, 5), in Berührung kommt, an der dem Werkstück, insbesondere Blech (4, 5), zugewandten Seite die Beschichtung (15) aufweist, welche eine geringere Höhe aufweist als das Trägermaterial (14) dieses Bandes (1).

5. Schutzeinrichtung nach Anspruch 4, **dadurch gekennzeichnet, dass** das Material des Trägermaterials (14) des der Elektrode (2) zugewandten Bandes (1) aus der Gruppe der Eisenmetalle, oder einer Legierung mit dem Hauptbestandteil aus der Gruppe der Eisenmetalle oder aus Kupfer oder einer Kupfer-Legierung besteht.

## Claims

1. A device for the protection of an electrode (2) during the resistance welding of workpieces, particularly metal sheets (4, 5), including a strip (1) placed over the electrode (2), preferably in a manner displaceable relative to the same, wherein a carrier material (14) of the strip (1) is provided with an electrically conductive coating (15) arranged on the side of the strip (1) facing away from the electrode (2), **characterized in that** said coating (15) is comprised of a material which has a lower hardness than the carrier material (14) of the strip (1) and a melting temperature of below 1000°C.

2. A protection device according to claim 1, **characterized in that** said coating (15) is made of tin or zinc or a tin or zinc alloy.

3. A protection device according to claim 1 or 2, **characterized in that** the carrier material of the strip (1) is made of steel and the coating (15) is made of tin.

4. A protection device according to one or several of claims 1 to 3, **characterized in that** at least two superimposed strips (1, 1') are provided, wherein the strip (1) that comes into contact with the workpiece, particularly metal sheet (4, 5), has the coating (15), which is of a smaller height than the carrier material (14) of said strip, on its side facing the workpiece, particularly metal sheet (4, 5).

5. A protection device according to claim 4, **characterized in that** the material of said carrier material (14) of the strip (1) facing the electrode (2) consists of the group of ferrous metals, or an alloy having its main component from the group of ferrous metals, or copper or a copper alloy.

## Revendications

1. Dispositif de protection d'une électrode (2) par soudage par résistance de pièces, en particulier de tôles (4, 5), avec une bande (1) agencée sur l'électrode (2), de préférence de façon mobile par rapport à celle-ci, un substrat (14) de la bande (1) présentant un revêtement (15) conducteur électriquement, qui est agencé sur le coté de la bande (1) adjacent à l'électrode (2), **caractérisé en ce que** le revêtement (15) est constitué d'un matériau qui présente une faible dureté, comme le substrat 14 de la bande (1), et qui présente une température de fusion inférieure à 1000 °C.

2. Dispositif de protection selon la revendication 1, **caractérisé en ce que** le revêtement (15) est réalisé en étain ou en zinc ou en alliage d'étain ou de zinc.

3. Dispositif de protection selon la revendication 1 ou 2, **caractérisé en ce que** le substrat de la bande (1) est constitué d'acier et le revêtement (15) est constitué d'étain.

4. Dispositif de protection selon l'une quelconque des revendications 1 à 3, **caractérisé en ce que** au moins deux bandes (1, 1'), disposées l'une au-dessus de l'autre, sont prévues, la bande (1), venant en contact avec la pièce, en particulier la tôle (4, 5), comprenant le revêtement (15) du côté adjacent à la pièce, en particulier la tôle (4, 5), le revêtement présentant une faible épaisseur comme le substrat (14) de cette bande (1).

5. Dispositif de protection selon la revendication 4, **caractérisé en ce que** le matériau du substrat (14) de la bande (1) adjacente à l'électrode (2) est constitué d'un matériau appartenant au groupe des métaux ferreux ou un alliage dont la plus grande part appartient au groupe des matériaux ferreux ou du cuivre ou un alliage de cuivre.
